# EUROPÄISCHE PATENTSCHRIFT

(11) **EP 1 438 188 B1**
(45) Veröffentlichungstag und Bekanntmachung des Hinweises auf die Patenterteilung: **08.08.2012**
(21) Anmeldenummer: 02777288.8
(22) Anmeldetag: 04.10.2002
(51) Int. Cl.: B32B 7/02, B32B 37/00, B42D 15/00

(54) **MEHRSCHICHTIGES SICHERHEITSDOKUMENT UND VERFAHREN ZU DESSEN HERSTELLUNG**
MULTILAYER SECURITY DOCUMENT AND METHOD FOR THE PRODUCTION THEREOF
DOCUMENT DE SECURITE A COUCHES MULTIPLES ET PROCEDE PERMETTANT DE LE PRODUIRE

(30) Priorität: 22.10.2001 DE 10151280
(43) Veröffentlichungstag der Anmeldung: 21.07.2004
(73) Patentinhaber: Bundesdruckerei GmbH, 10969 Berlin (DE)
(72) Erfinder: HOEPPNER, Harald, 12309 Berlin (DE); LÖER, Thomas, 10961 Berlin (DE); MÄRTENS, Detlef, 13599 Berlin (DE)
(74) Vertreter: KEIL & SCHAAFHAUSEN Patentanwälte
(86) Internationale Anmeldenummer: PCT/EP2002/011170
(87) Internationale Veröffentlichungsnummer: WO 2003/035388

(56) Entgegenhaltungen:
- EP-A- 0 858 056
- WO-A-00/50238
- WO-A-89/00742
- FR-A- 2 129 198
- US-A- 4 171 864
- US-A- 4 269 473

## Beschreibung

Die Erfindung geht aus von einem mehrschichtigen Sicherheitsdokument und einem Verfahren zur Herstellung eines mehrschichtigen Sicherheitsdokuments nach Gattung der unabhängigen Ansprüche. Aus der WO 00/50238 A1 ist bereits ein mehrschichtiges Sicherheitsdokument bekannt, bei dem ein bedruckbares Trägermaterial beidseitig mit einer auflaminierten Deckfolie oder einer auflaminierten Deckverbundfolle versehen ist. Es ist ebenfalls aus der WO 00/50238 A1 bekannt, daß auf das bedruckbare Trägermaterial als Rollenware nach einer Extrusionsbeschichtung mit einem laseraktiven Kunststoff die Deckfolien auflaminiert werden.

Die Druckschrift EP 0 858 056 A2 zeigt und beschreibt einen Datenträger mit einer Schicht aus einem Photopolymermaterial, welche auf eine weitere Schicht aufkaschiert ist. Dieser Schichtverbund kann zusätzlich ein- oder zweiseitig mit transparenten Schutzschichten versehen sein. Ebenfalls ein mehrschichtiger Datenträger wird in der Druckschrift WO 89/00742 A1 beschrieben. Dieser Datenträger weist ein Basismaterial auf, das mit einer teilweise auf dieser Schicht angeordneten Photopolymerschicht versehen ist. Oberhalb dieser Photopolymerschicht ist eine metallische Aufzeichnungsschicht aufgebracht, welche mit einer Kunststoffschicht bedeckt ist. In der Druckschrift US 4,171,864 wird ein mehrschichtiges Identifikationsdokument beschrieben, bei dem eine Schicht mit photografischen Substanzen wie Silberhaliden oder thermoplastischen Materialien, welche durch Halbleitermaterial photoelektrisch sensibilisiert sind, als Träger für ein Hologramm versehen ist. Unterhalb dieser Schicht ist ein Druckträger und oberhalb dieser Schicht ein Deckmaterial angeordnet In der Druckschrift US 4,269,473 wird eine dreischichtige ID-Karte beschrieben, welche aus einem photografischen Film und einerdarunter liegenden opaken Schicht und einer darüber angeordneten Deckschicht aus einem transparenten Material besteht.

Die Aufgabe der vorliegenden Erfindung gegenüber dem Stand der Technik besteht darin, ein Sicherheitsdokument zu schaffen, das eine fest haftende Verbindung der Photopolymer-Schicht mit den übrigen Schichten beinhaltet. Hinsichtlich des Herstellungsverfahrens besteht die Aufgabe darin, ein Verfahren zur Herstellung eines derartigen Sicherheitsdokuments anzugeben, das kostengünstig ist.

Die obigen Angaben werden gelöst durch das Sicherheitsdokument mit den Merkmalen des Anspruchs 1 und das Herstellungsverfahren mit den Merkmalen des Anspruchs 7.

Das erfindungsgemäße mehrschichtige Sicherheitsdokument mit des Merkmalen des unabhängigen Anspruchs hat demgegenüber den Vorteil, daß weiter Sicherheitsmerkmale in dem Sicherheitsdokument eingebracht werden können, wobei diese Sicherheitsmerkmale für Nachahmungen und Fälschungen sehr schwer zugänglich sind. Weiter vorteilhaft ist, die Photopolymer-Deckfolie des Schichtverbunds mit zusätzlichen Sicherheitsmerkmalen aus Polyethyten zu fertigen, da sich das Polyethylen mit den übrigen Bestandteilen des mehrschichtigen Sicherheitsdokuments einfach verbinden läßt. Durch die in den abhängigen Ansprüchen aufgeführten Maßnahmen sind vorteilhafte Weiterbildungen und Verbesserungen des im unabhängigen Anspruch angegebenen Sicherheitsdokuments möglich. Um eine zu hohe Dicke des mehrschichtigen Sicherheitsdokuments und eine ausreichende Anzahl von Bragg'schen Netzebenen für die Volumenhologramme, die in der Photopolymer-Schicht eingebracht sind, bereitzustellen, Ist es vorteilhaft, die Photopolymer-Schicht so zu gestalten, daß sie nicht wesentlich dicker als 50 µm, ist. Des weiteren ist vorteilhaft, das Trägermaterial mit einem mindestens teilweise transparenten Deckfolienverbund oder einer mindestens teilweise transparenten Deckfolie zu schützen. Hierbei ist es insbesondere vorteilhaft, diese Schutzschicht kratzfest auszuführen. Die laseraktive Ausbildung von Schichten des mehrschichtigen Sicherheitsdokuments läßt auf vorteilhafte Weise die Einbringung weiterer Sicherheitselemente in das Sicherheitsdokument zu.

Das erfindungsgemäße Verfahren zur Herstellung eines mehrschichtigen Sicherheitsdokuments mit den Merkmalen des unabhängigen Anspruchs hat den Vorteil, daß mit geringem zusätzlichen Aufwand zusätzliche Sicherheitsmerkmale in ein mehrschichtiges Sicherheitsdokument einbringbar sind, die für einen potentiellen Fälscher schwer zugänglich sind. Weiterhin vorteilhaft ist, daß die Fertigung von Rollenbahnen erfolgt, so daß aufwendige Transportmechanismen (wie bei der Fertigung in Bogen) vermieden werden können. Durch die in den abhängigen Ansprüchen aufgeführten Maßnahmen sind vorteilhafte Weiterbildungen und Verbesserungen des im unabhängigen Anspruch angegebenen Verfahrens möglich. Besonders vorteilhaft ist, daß eine passgenaue Ausrichtung der verschiedenen Bestandteile des Sicherheitsdokuments erreichbar ist. Des weiteren ist vorteilhaft, daß das Verfahren einen nur unwesentlich größeren Platzbedarf aufweist Ebenfalls vorteilhaft ist die Verwendung von geringen Temperaturen und Drücken für die Aufbringung der Deckfolie bzw. des Deckfolienverbunds. Somit können die Herstellungskosten gering gehalten werden. Auf vorteilhafte Weise können Oberflächenmuster in das Sicherheitsdokument eingeprägt werden, wobei diese Muster zusätzliche Sicherheitsmerkmale darstellen, die die Fälschungssicherheit des Dokuments weiter erhöhen.

Weitere Vorteile des erfindungsgemäßen mehrschichtigen Sicherheitsdokuments und des erfindungsgemäßen Verfahrens zur Herstellung eines mehrschichtigen Sicherheitsdokuments können der nachfolgenden Beschreibung entnommen werden.

### Zeichnungen

Ausführungsbeispiele der Erfindung sind anhand von Zeichnungen dargestellt und in der nachfolgenden Beschreibung näher erläutert. Es zeigen
Figur 1 ein erfindungsgemäßes mehrschichtiges Sicherheitsdokument (im Querschnitt, schematisch) und
Figur 2 ein erfindungsgemäßes Verfahren zur Herstellung eines mehrschichtigen Sicherheitsdokuments (schematisch).

### Beschreibung der Ausführungsbeispiele

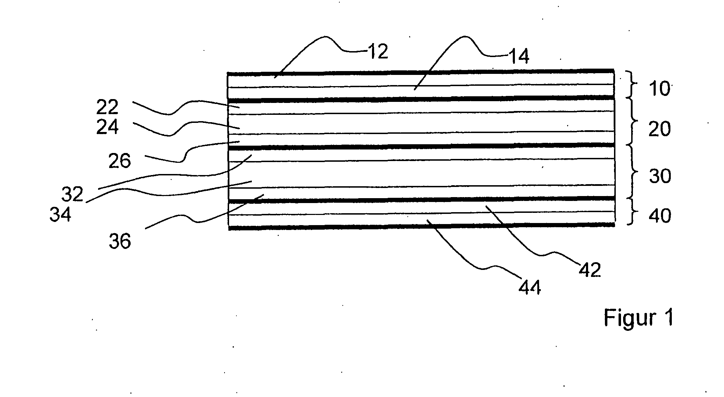

In Figur 1 ist schematisch ein erfindungsgemäßes mehrschichtiges Sicherheitsdokument im Querschnitt dargestellt. Es besteht aus einem Trägermaterial 30, welches bedruckbar ist und aus einem Sicherheitspapier oder einem Kunststoff. Dieses Trägermaterial weist Sicherheitselemente wie beispielsweise Guillochen oder Wasserzeichen auf und ist bedruckbar. Die druckbaren Bestandteile des Trägermaterials sind vor Zusammenfügen des mehrschichtigen Sicherheitsdokuments bereits aufgebracht. Hierfür können verschiedene

Druckverfahren, beispielsweise Tiefdruck (z.B. Stahlstichtiefdruck), Hochdruck (z.B. Flexodruck), Flachdruck (z.B. Offsetdruck) oder Durchdruck (z.B. Siebdruck) verwendet werden. In einem besonders bevorzugten Ausführungsbeispiel besteht das Trägermaterial 30 aus einem Schichtverbund, wobei das Papier- oder Kunststoffinlett 34 beidseitig mit mindestens teilweise transparenten Kunststoffbeschichtungen 32, 36 versehen ist.

Das Trägermaterial 30 ist mit einer Deckfolie oder einem Deckfolienverbund 10 verbunden. Die Deckfolie oder der Deckfolienverbund 10 hat die Aufgabe, daß Trägermaterial vor Umwelteinflüssen, beispielsweise vor Verkratzen zu schützen. Deshalb ist der Deckfolienverbund 10 vorzugsweise zweischichtig aufgebaut und weist vorzugsweise eine kratzfest Polyesterschicht 12 auf, die der Außenseite des Dokuments zugewandt ist. Darunter ist eine Polyethylenschicht 14 angeordnet, die dem Trägermaterial 30 zugewandt ist. Die Deckfolie oder der Deckfolienverbund 10 ist mindestens teilweise transparent.

Zwischen der Deckfolie oder dem Deckfolienverbund 10 und dem Trägermaterial 30 ist erfindungsgemäß ein Photopolymer-Schichtverbund 20 angeordnet, wobei in diesem Schichtverbund Informationen einbelichtet sind. Derartige Informationen sind vorzugsweise als Volumenhologramme ausgebildet, die zusätzliche Sicherheitsmerkmale für das mehrschichtige Sicherheitsdokument darstellen. In einem besonders bevorzugten Ausführungsbeispiel ist der Photopolymer-Schichtverbund 20 dreischichtig aufgebaut, wobei die eigentliche Photopolymer-Schicht 24, die die Informationen trägt, beidseitig mit je einer Photopolymer-Deckfolie 22, 26 versehen ist. Diese Photopolymer-Deckfolie ist überwiegend aus Polyethylen gebildet. Somit ist die Photopolymer-Deckfolie 22 mit der Polyethylenschicht 14 der Deckfolie oder des Deckfolienverbunds 10 verbunden, während die Photopolymer-Deckfolie 26 mit der Polyethylenbeschichtung des Papier- oder Kunststoffinletts 34 verbunden ist. Somit werden hier auf vorteilhafte Weise jeweils Polyethylenbeschichtungen miteinander verbunden, wobei diese Verbindung mit geringem Apparate- und Kostenaufwand erfolgen kann. Der Photopolymer-Schichtverbund 20 ist mindestens teilweise transparent ausgeführt und somit auch die Photopolymer-Schicht 24 und die Photopolymer-Deckfolie 22, 26.

Das Trägermaterial 30 weist in einem bevorzugten Ausführungsbeispiel auf der Seite, auf der kein Photopolymer-Schichtverbund 20 vorgesehen ist, einen weiteren Deckfolienverbund oder eine weitere Deckfolie 40 auf, wobei diese direkt auf das Trägermaterial 30 aufgebracht ist. Analog zur Deckfolie oder Deckfolienverbund 10 weist die weitere Deckfolie oder der weitere Deckfolienverbund 40 in einem bevorzugten Ausführungsbeispiel eine dem Trägermaterial zugewandte Polyethylenschicht und eine der Außenseite des mehrschichtigen Sicherheitsdokuments zugewandten kratzfesten Polyesterschicht 44 auf. So ist auch auf dieser Seite des Sicherheitsdokuments das Trägermaterial vor Verschleiß geschützt. Die weitere Deckfolie oder der weitere Deckfolienverbund 40 ist mindestens teilweise transparent ausgeführt.

In einem weiteren bevorzugten Ausführungsbeispiel kann zwischen Trägermaterial 30 und Photopolymer-Schichtverbund 20 eine Photo-Emulsion vorgesehen sein. In diese Photo-Emulsion können Informationen, beispielsweise ein Paßbild einbelichtet sein. In einem besonderen bevorzugten Ausführungsbeispiel ist in diesem Fall zwischen Trägermaterial 30 und weiterer Deckfolie oder dem weiteren Deckfolienverbund 40 eine Rückseiten-Emulsion angeordnet, die die durch die Photo-Emulsion hervorgerufene Verformungen des Trägermaterials verhindert.

Es können weiterhin unter Anwendung oben genannter Druckverfahren zusätzliche Informationen in das mehrschichtige Sicherheitsdokument zwischen verschiedenen Schichten eingebracht werden. Beispielsweise können Informationen zwischen Trägermaterial 30 und Photopolymer-Schichtverbund 20, zwischen dem Polyethylen 14 oder dem Polyester 12 der Deckfolie oder des Deckfolienverbunds 10 bzw. dem Polyethylen 42 und dem Polyester 44 der weiteren Deckfolie oder des weiteren Deckfolienverbunds 40 oder dem Trägermaterial 30 und der weiteren Deckfolie und dem weiteren Deckfolienverbund 40 gedruckt werden. Außerdem können Hologramme oder Sicherheitsstreifen zwischen den genannten Schichten des mehrschichtigen Sicherheitsdokuments angeordnet werden.

In einem weiteren bevorzugten Ausführungsbeispiel können Schichten des mehrschichtigen Sicherheitsdokuments laseraktiv ausgeführt sein, d.h. daß die Schichten bei Bestrahlung mittels Laser einen Farbänderung, eine Änderung der Lichtdurchlässigkeit oder eine Änderung der Schichtdicke unterworfen sind. Eine derartige lokale Änderung der Eigenschaften der entsprechenden Schicht ermöglicht das Einbringen von Informationen. Vorzugsweise sind die Photopolymer-Deckfolien 22 und/oder 26 und/oder die Deckfolie oder der Deckfolienverbund 10 (hierbei vorzugsweise die dem Trägermaterial zugewandte Polyethylen-Schicht 14) und/oder die weitere Deckfolie oder der weitere Deckfolienverbund 40 (hierbei vorzugsweise die dem Trägermaterial zugewandte Polyethylen-Schicht 42) und/oder die transparenten Kunststoffbeschichtungen 32 und/oder 36 des Trägermaterials 30 laseraktiv ausgeführt.

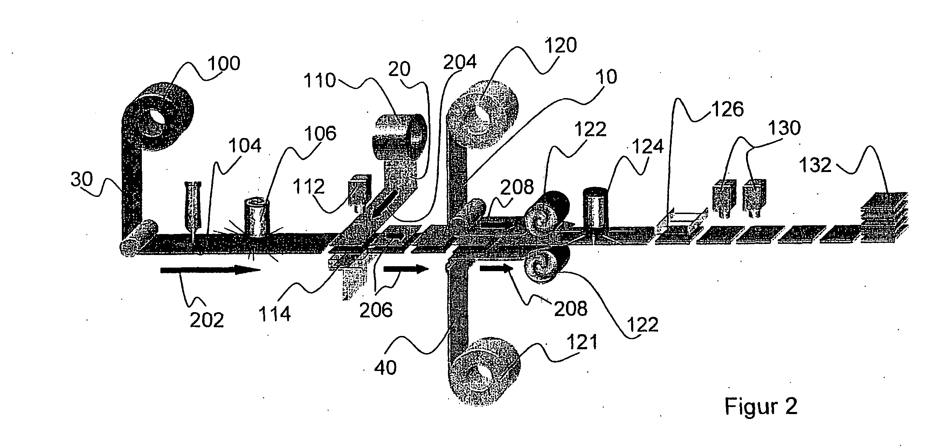

Das erfindungsgemäße Verfahren zur Herstellung des in Figur 1 dargestellten erfindungsgemäßen mehrschichtigen Sicherheitsdokuments ist schematisch in Figur 2 dargestellt und soll nachstehend erläutert werden. Dabei beginnt das Verfahren auf der linken Seite der Zeichnung und endet auf der rechten Seite. Die Bewegungsrichtungen der Materialien werden in Figur 2 mit einem Pfeil gekennzeichnet, der jeweils ein Bezugszeichen aufweist. Bei den folgenden Ausführungen wird lediglich das Bezugszeichen des jeweiligen Pfeils angegeben. Es wird sich im Folgenden auf die Herstellung des anhand von Figur 1 dargestellte mehrschichtigen Sicherheitsdokuments bezogen. Auf den detaillierten Aufbau der Hauptbestandteile Deckfolie oder Deckfolienverbund 10, Photopolymer-Schichtverbund 20, Trägermaterial 30 und weitere Deckfolie oder weiterer Deckfolienverbund wird nicht noch einmal gesondert eingegangen sondern auf das oben Dargestellte verwiesen.

Das in Rollenform 100 vorliegenden Trägermaterial 30 wird von dieser Rolle abgewickelt und anschließend mit einem Haftvermittler 104 versehen. Dabei bewegt sich das von der Rolle 100 abgewickelte Trägermaterial 30 in die Richtung 202 weiter. In einem besonders bevorzugten Ausführungsbeispiel wird der Haftvermittler 104 nachfolgend mittels einer Heizung 106 getrocknet.

In einem nächsten Schritt wird nun der auf einer Rollenbahn 110 befindliche Photopolymer-Schichtverbund 20 von der Rolle abgewickelt und dem Trägermaterial 30 auf der Seite zugeführt, auf der der Haftvermittler 104 aufgebracht ist. Dabei sind die oben angesprochenen Informationen (bspw. Volumenhologramme) bereits entwickelt in der in Figur 2 nicht dargestellten Photopolymerschicht 24 des Photopolymer-Schichtverbunds 20 eingebracht. In einem bevorzugten Ausführungsbeispiel wird der Photopolymer-Schichtverbund 20, wie in Figur 2 dargestellt, seitlich zugeführt. Das bedeutet, daß die Richtung 204, in die der Photopolymer-Schichtverbund 20 abgewickelt wird, im wesentlich senkrecht auf der Richtung 202, in die das Trägermaterial 30 abgewickelt wird, steht. In einem weiteren Ausführungsbeispiel ist es jedoch auch möglich, die Erfindung so auszuführen, daß die Richtung 204, in der der Photopolymer-Schichtverbund 20 abgewickelt wird, parallel zur Richtung 202, in der das Trägermaterial abgewickelt wird, verläuft.

In dem in Figur 2 dargestellten bevorzugten Ausführungsbeispiel wird zusätzlich anhand eines Lesegerätes 112 und der sich auf dem Trägermaterial 30 und dem Photopolymer-Schichtverbund 20 befindlichen Positionierungsmarkierungen eine Ausrichtung des Photopolymer-Schichtverbunds 20 und des Trägermaterials 30 vorgenommen, so daß beide Materialien passgenau zusammengefügt werden. Nach der Zuführung des Photopolymer-Schichtverbunds 20 wird der Verbund aus Photopolymer-Schichtverbund 20 und Trägermaterial 30 mittels einer Stanze 114 zu Einzelnutzen ausgestanzt. Dies ist insbesondere in diesem bevorzugten Ausführungsbeispiel deshalb notwendig, weil die Abwickelrichtungen des Trägermaterials 30 und des Photopolymer-Schichtverbunds 20 nicht parallel zueinander verlaufen. In dem bereits angesprochenen ebenfalls möglichen Ausführungsbeispiel, bei dem beide Abwickelrichtungen parallel zueinander verlaufen, ist das Ausstanzen der Einzelnutzen zu diesem Zeitpunkt nicht notwendig.

Der Verbund aus Trägermaterial 30 und Photopolymer-Schichtverbund bewegt sich nun gemeinsam in eine der Abwickelrichtungen des Trägermaterials oder des Photopolymer-Schichtverbunds weiter, wobei in dem in Figur 2 dargestellten Ausführungsbeispiel die Fortbewegungsrichtung 206 der Abwickelrichtung des Trägermaterials 202 entspricht. In einem weiteren Schritt wird nun die auf einer Rollenbahn 120 befindliche Deckfolie 10 oder der auf einer Rollenbahn 120 befindliche Deckfolienverbund 10 oberhalb des Photopolymer-Schichtverbunds 20 zugeführt. Die Zuführungsrichtung 208 entspricht der Richtung 206, in die sich der Verbund aus Photopolymer-Schichtverbund 20 und Trägermaterial 30 fortbewegt. Alle Schichten werden im Folgenden mittels beheizter Anpreßwalzen 122 laminiert, d. h. unter Aufbringung von Druck und Temperatur zusammengefügt. Die Laminiertemperatur liegt zwischen 100° C und 200° C, vorzugsweise zwischen 100°C und 150°C. In einem nachfolgenden Schritt wird in einem bevorzugten Ausführungsbeispiel der nun zusammengefügte Verbund aus Deckfolie oder Deckfolienverbund 10, Photopolymer-Schichtverbund 20 und Trägermaterial 30 mittels eines Kühlaggregats 124, vorzugsweise eines Lüfters, gekühlt.

In einem weiteren bevorzugten Ausführungsbeispiel wird gleichzeitig zur Zuführung des auf einer Rollenbahn 120 befindlichen Deckfolienverbunds oder der Deckfolie 10 auf der Unterseite des Trägermaterials 30 eine auf einer Rollenbahn 121 befindliche weitere Deckfolie 40 oder ein auf einer Rollenbahn 121 befindlicher weiterer Deckfolienverbund 40 zugeführt. Die Zuführungsrichtung 208 der weiteren Deckfolie oder des weiteren Deckfolienverbunds 40 entspricht der Zuführungsrichtung der Deckfolie oder des Deckfolienverbunds 10. In diesem bevorzugten Ausführungsbeispiel wird die Deckfolie oder der Deckfolienverbund 40 gleichzeitig mit allen übrigen Bestandteilen des mehrschichtigen Sicherheitsdokuments (Deckfolie oder Deckfolienverbund 10, Photopolymer-Schicht 20 und Trägermaterial 30) unter Aufbringung von Temperatur und Druck mittels beheizter Anpreßwalzen 122 laminiert und in einem bevorzugten Ausführungsbeispiel gekühlt. In diesem Fall besteht das so hergestellte mehrschichtige Sicherheitsdokument aus den Bestandteilen Deckfolie oder Deckfolienverbund 10, Photopolymer-Schichtverbund 20, Trägermaterial 30 und weiterer Deckfolie oder dem weiteren Deckfolienverbund 40.

In einem weiteren Schritt werden nun die sich noch auf einer Rollenbahn befindlichen mehrschichtigen Sicherheitsdokumente passgenau in Einzelnutzen mittels einer Stanze 126 ausgestanzt. Vor, während oder nach dem Ausstanzen der Einzelnutzen wird in einem weiteren bevorzugten Ausführungsbeispiel mittels Prägeelementen die Oberfläche des Sicherheitsdokuments hoch- oder tiefgeprägt, um taktile Sicherheitselemente einzubringen. Der Ort der Prägung ist somit entweder die Deckfolie oder der Deckfolienverbund 10 und/oder die weitere Deckfolie oder der weitere Deckfolienverbund 40 oder (bei Fehlen der weiteren Deckfolie oder des weiteren Deckfolienverbunds 40) das Trägermaterial 30. Die eingeprägten Oberflächenmuster können dabei mindestens teilweise als Mikroschrift ausgeführt sein. Des weiteren können die eingeprägten Oberflächenmuster derart ausgeführt sein, daß sie mindestens teilweise Linsenstrukturen enthalten.

Bei einer Ausführung des Photopolymer-Schichtverbunds 20 mit einer Photopolymer-Deckfolie 22 und/oder 26, die laseraktiv ausgeführt ist (sind), und/oder bei einer laseraktiven Gestaltung der Deckfolie oder des Deckfolienverbunds 10 und/oder der weiteren Deckfolie oder des weiteren Deckfolienverbunds 40 und/oder des Trägermaterials 30 können nach dem Abwickeln des Trägermaterials 30 von der Rolle 100 oder nach dem Zusammenfügen von Photopolymer-Schichtverbund 20 und Trägermaterial 30 oder nach dem Laminieren des Trägermaterials 30 und des Photopolymer-Schichtverbunds 20 sowie der Deckfolie oder des Deckfolienverbunds 10 und/oder der weiteren Deckfolie oder des weiteren Deckfolienverbunds 40 Informationen in die entsprechenden Schichten mittels bekannter Lasereinrichtungen eingebracht werden. Das Einbringen der Informationen kann aufgrund farblicher Änderungen oder Änderungen in der Lichtdurchlässigkeit oder Änderungen in der Schichtdicke (bspw. Entfernen oder Aufschäumen der Schicht) erfolgen.

In einem weiteren bevorzugten Ausführungsbeispiel werden anschließend mittels eines oder mehrerer Lesegeräte 130 die in den Sicherheitsdokumenten befindlichen Sicherheitsmerkmale oder die eingebrachten Daten gelesen und mit den Vorgaben überprüft. Abschließend werden die ausgestanzten Einzelnutzen nach erfolgreicher Prüfung in einem weiteren Schritt 132 aufgestapelt. Die fehlerhaften Sicherheitsdokumente wurden vorher aussortiert.

## Patentansprüche

1. Mehrschichtiges Sicherheitsdokument, wobei ein bedruckbares Trägermaterial (30) zusammengesetzt aus einem Papier- oder Kunststoffinlet (34) und einer Polyethylenbeschichtung (32) mit mindestens einer mindestens teilweise transparenten Deckfolie oder einem mindestens teilweise transparenten Deckfolienverbund (10) verbunden ist, **dadurch gekennzeichnet, dass** zwischen der Deckfolie oder dem Deckfolienverbund (10) und dem Trägermaterial (30) ein Photopolymer-Schichtverbund (20) vorgesehen ist, der aus einer beidseitig mit einer aus Kunststoff bestehenden Photopolymer-Deckfolie (22, 26) verklebten Photopolymerschicht (24) besteht, wobei die Photopolymerschicht (24) und die Photopolymer-Deckfolie (22, 26) mindestens teilweise transparent sind und In mindestens einem Bereich der Photopolymerschicht Informationen einbelichtet sind, wobei der Photopolymer-Schichtverbund (20) mit der Deckfolie oder dem Deckfolienverbund (10) und dem Trägermaterial (30) verbunden ist, wobei die Photopolymer-Deckfolie (22, 26) überwiegend aus Polyethylen besteht und die Deckfolie als Polyethylenschicht ausgebildet ist oder der Deckfolienverbund (10) eine dem Trägermaterial (30) zugewandte Polyethylenschicht (14) aufweist.

2. Mehrschichtiges Sicherheitsdokument nach Anspruch 1, **dadurch gekennzeichnet, dass** die Photopolymerschicht (24) des Photopolymer-Schichtverbunds wesentlich dicker als 60 µm ist.

3. Mehrschichtiges Sicherheitsdokument nach einem der Ansprüche 1 bis 2, **dadurch gekennzeichnet, dass** das Trägermaterial (30) auf der Seite, auf der kein Photopolymer-Schichtverbund (20) vorgesehen Ist, mit einer mindestens teilweise transparenten Deckfolie oder einem mindestens teilweise transparenten Deckfolienverbund (40) verbunden ist.

4. Mehrschichtiges Sicherheitsdokument nach einem der Ansprüche 1 bis 3, **dadurch gekennzeichnet, dass** der Deckfolienverbund (10,40) aus einer Polyethylen-Schicht (14, 42) und einer der Außenseite des Sicherheitsdokuments zugewandten kratzfesten Schicht (12, 44) besteht.

5. Mehrschichtiges Sicherheitsdokument nach Anspruch 4, **dadurch gekennzeichnet, dass** die kratzfeste Schicht (12,44) aus Polyester besteht

6. Mehrschichtiges Sicherheitsdokument nach einem der Ansprüche 1 bis 5, **dadurch gekennzeichnet, dass** der Photopolymer-Schichtverbund (20) und/oder das Trägermaterial (30) und/oder die Deckfolie oder der Deckfolienverbund (10, 40) laseraktiv ausgeführt sind.

7. Verfahren zur Herstellung eines mehrschichtigen Sicherheitsdokuments, bestehend aus einem bedruckbaren Trägermaterial (30) und mindestens einer mindestens teilweise transparenten Deckfolie oder einem mindestens teilweise transparenten Deckfolienverbund (10), mit folgenden Schritten:
a) mindestens teilweise Beschichtung des sich auf einer Rollenbahn (100) befindlichen Trägermaterials (30) zusammengesetzt aus einem Papier- oder Kunststoffinlet (34) und einer Polyethylenbeschichtung (32) mit einem Haftvermittler (104),
b) Zuführung eines sich auf einer Rollenbahn (110) befindlichen Photopolymer-Schichtverbunds auf der Seite des Trägermaterials, die mit dem Haftvermittler versehen ist, wobei der Photopolymer-Schichtverbund aus einer beidseitig mit einer aus Kunststoff bestehenden Photopolymer-Deckfolie (22, 26) verklebten Photopolymerschicht (24) besteht, wobei die Photopolymerschicht (24) und die Photopolymer-Deckfolie (22, 26) mindestens teilweise transparent sind und in mindestens einem Bereich der Photopolymerschicht Informationen einbelichtet sind, wobei die Photopolymer-Deckfolie (22, 26) überwiegend aus Polyethylen besteht.
c) Zuführung der sich auf einer Rollenbahn (120) befindlichen Deckfolie oder des sich auf einer Rollerbahn (120) befindlichen Deckfolienverbunds (10) oberhalb des Photopolymer-Schichtverbunds (20), wobei die Deckfolie als Polyethylenschicht ausgebildet ist oder der Deckfolienverbund (10) eine dem Trägermaterial (30) zugewandte Polyethylenschicht (14) aufweist,
d) Zusammenfügen der Deckfolie, des Photopolymer-Schichtverbunds und des Trägermaterials mittels beheizter Anpreßwalzen (122),
e) Ausstanzen der Einzelnutzen mittels Stanzeinrichtung (126).

8. Verfahren nach Anspruch 7, **dadurch gekennzeichnet, dass** der Photopolymer-Schichtverbund (20) während der Zuführung mit dem Trägermaterial anhand einer auf dem Photopolymer-Schichtverbund befindlichen und einer weiteren, auf dem Trägermaterial befindlichen Positionierungsmarke ausgerichtet wird, wobei die Positionierungsmarken vorher mittels eines Positionierungsmarken-Lesegeräts (112) gelesen werden.

9. Verfahren nach einem der Ansprüche 7 bis 8, **dadurch gekennzeichnet, dass** der Haftvermittler vor der Zuführung des Photopolymer-Schichtverbunds mittels einer Heizung (106) getrocknet wird.

10. Verfahren nach einem der Ansprüche 7 bis 9, **dadurch gekennzeichnet, dass** der Photopolymer-Schichtverbund (20) seitlich zugeführt wird, wobei die Bewegungsrichtung des Photopolymer-Schichtverbunds (204) im Wesentlichen senkrecht auf der Bewegungsrichtung des Trägermaterials (202) steht.

11. Verfahren nach einem der Ansprüche 7 bis 10 **dadurch gekennzeichnet, dass** aus dem Trägermaterial (30) mit dem Photopolymer-Schichtverbund (20) vor der Zuführung der Deckfolie oder des Deckfolienverbunds Einzelnutzen mittels einer Stanzeinrichtung (114) ausgestanzt werden.

12. Verfahren nach einem der Ansprüche 7 bis 11, **dadurch gekennzeichnet, dass** die Zuführungsrichtung der Deckfolie oder des Deckfolienverbunds (208) im Wesentlichen parallel zur Bewegungsrichtung des Trägermaterials mit Photopolymer-Schichtverbund (206) verläuft.

13. Verfahren nach einem der Ansprüche 7 bis 12, **dadurch gekennzeichnet, dass** auf der nicht den Photopolymer-Schichtverbund enthaltenen Seite des Tragermaterials vor der Verbindung von Trägermaterial, Photopolymer-Schichtverbund und Deckfolie oder Deckfolienverbund zusätzlich eine weitere, sich auf einer Rollenbahn (121) befindende Deckfolie (40) oder ein weiterer, sich auf einer Rollenbahn (121) befindender Deckfolienverbund (40) zugeführt wird.

14. Verfahren nach Anspruch 13, **dadurch gekennzeichnet, dass** das Zusammenfügen der Deckfolie oder des Deckfolienverbunds (40), der sich nicht auf der Seite des Photopolymer-Schichtverbunds befindet, sowie des Photopolymer-Schichtverbunds (20) und des Trägermaterials (30) und der Deckfolie oder des Deckfolienverbunds (10) auf der Seite des Photopolymer-Schichtverbunds im gleichen Arbeitsschritt mittels beheizter Anpreßwalzen (122) durchgeführt wird.

15. Verfahren nach einem der Ansprüche 7 bis 14, **dadurch gekennzeichnet, dass** die Temperatur beim Zusammenfügen von Trägermaterial (30), Photopolymer-Schichtverbund (20) und Deckfolie oder Deckfolienverbund (10, 40) im Bereich zwischen 100°C und 200°C liegt.

16. Verfahren nach einem der Ansprüche 7 bis 15, **dadurch gekennzeichnet, dass** die im Sicherheitsdokument enthaltenen Daten und Sicherheitsmerkmale nach dem Ausstanzen der Einzelnutzen mittels eines oder mehrerer Lesegeräte (130) geprüft werden.

17. Verfahren nach einem der Ansprüche 7 bis 16, **dadurch gekennzeichnet, dass** vor und/oder während und/oder nach dem Ausstanzen eine Oberflächenstruktur in das Sicherheitsdokument eingeprägt wird.

18. Verfahren nach Anspruch 17, **dadurch gekennzeichnet, dass** die Oberflächenstruktur mindestens teilweise als Mikroschrift und/oder mindestens teilweise als Linsenstruktur ausgebildet ist.

## Claims

1. A multi-layer security document, a printable carrier material (30) composed of a paper inlet or plastics material inlet (34) and a polyethylene coating (32) being connected to at least one at least partially transparent cover film or one at least partially transparent cover film composite (10), **characterised in that** a photopolymer layer composite (20) is provided between the cover film or the cover film composite (10) and the carrier material (30), said photopolymer layer composite consisting of a photopolymer layer (24) glued on both sides to a photopolymer cover film (22, 26), consisting of plastics material, the photopolymer layer (24) and the photopolymer cover film (22, 26) being at least partially transparent and information being exposed in at least one region of the photopolymer layer, the photopolymer layer composite (20) being connected to the cover film or the cover film composite (10) and the carrier material (30), the photopolymer cover film (22, 26) consisting predominantly of polyethylene and the cover film being formed as a polyethylene layer or the cover film composite (10) having a polyethylene layer (14) facing the carrier material (30).

2. The multi-layer security document according to claim 1, **characterised in that** the photopolymer layer (24) of the photopolymer layer composite is substantially thicker than 50 µm.

3. The multi-layer security document according to one of claims 1 to 2, **characterised in that**, on the side on which there is no photopolymer layer composite (20), the carrier material (30) is connected to an at least partially transparent cover film or an at least partially transparent cover film composite (40).

4. The multi-layer security document according to one of claims 1 to 3, **characterised in that** the cover film composite (10, 40) consists of a polyethylene layer (14, 42) and of a scratch-resistant layer (12, 44) facing the outer face of the security document.

5. The multi-layer security document according to claim 4, **characterised in that** the scratch-resistant layer (12, 44) consists of polyester.

6. The multi-layer security document according to one of claims 1 to 5, **characterised in that** the photopolymer layer composite (20) and/or the carrier material (30) and/or the cover film or the cover film composite (10, 40) are designed so as to be laser-active.

7. A method for producing a multi-layer security document consisting of a printable carrier material (30) and at least one at least partially transparent cover film or one at least partially transparent cover film composite (10), comprising the following steps:
a) at least partially coating the carrier material (30), which is located on a roller conveyer (100) and is composed of a paper inlet or plastics material inlet (34) and of a polyethylene coating (32), with a bonding agent (104),
b) supplying a photopolymer layer composite located on a roller conveyer (110) to the side of the carrier material provided with the bonding agent, the photopolymer layer composite consisting of a photopolymer layer (24) glued on both sides to a photopolymer cover film (22, 26) consisting of plastics material, the photopolymer layer (24) and the photopolymer cover film (22, 26) being at least partially transparent and information being exposed in at least one region of the photopolymer layer, the photopolymer cover film (22, 26) consisting predominantly of polyethylene,
c) supplying the cover film located on a roller conveyor (120) or the cover film composite (10) located on a roller conveyor (120) above the photopolymer layer composite (20), □the cover film being formed as a polyethylene layer or the cover film composite (10) having a polyethylene layer (14) facing the carrier material (30),
d) joining the cover film, the photopolymer layer composite and the carrier material by means of heated pressure roller (122),
e) punching out the individual grooves by means of a punching device (126).

8. The method according to claim 7, **characterised in that**, during supply with the carrier material, the photopolymer layer composite (20) is oriented with the aid of a position mark located on the photopolymer layer composite and a further position mark located on the carrier material, the position marks being read in advance by means of a position mark reader (112).

9. The method according to one of claims 7 to 8, **characterised in that** the bonding agent is dried by means of a heater (106) before the photopolymer layer composite is supplied.

10. The method according to one of claims 7 to 9, **characterised in that** the photopolymer layer composite (20) is supplied laterally, the direction of movement of the photopolymer layer composite (204) being substantially perpendicular to the direction of movement of the carrier material (202).

11. The method according to one of claims 7 to 10, **characterised in that** individual grooves are punched out of the carrier material (30) with the photopolymer layer composite (20) by means of punching device (114) prior to supply of the cover film or of the cover film composite.

12. The method according to one of claims 7 to 11, **characterised in that** the device supplying the cover film or the cover film composite (208) extends substantially parallel to the direction of movement of the carrier material with photopolymer layer composite (206).

13. The method according to one of claims 7 to 12, **characterised in that** a further cover film (40) located on a roller conveyor (121) or a further cover film composite (40) located on a roller conveyor (121) is additionally supplied on the side of the carrier material not containing the photopolymer layer composite, prior to connection of carrier material, photopolymer layer composite and cover film or cover film composite.

14. The method according to claim 13, **characterised in that** the cover film or the cover film composite (40), not located on the side of the photopolymer layer composite, and the photopolymer layer composite (20) and the carrier material (30) and the cover film or the cover film composite (10) are joined on the side of the photopolymer layer composite in the same working step by means of heated pressure roller (122).

15. The method according to one of claims 7 to 14, **characterised in that** the temperature when joining the carrier material (30), photopolymer layer composite (20) and cover film or cover film composite (10, 40) lies in the range between 100 °C and 200 °C.

16. The method according to one of claims 7 to 15, **characterised in that** the data and security features contained in the security document are checked by means of one or more reading devices (130) once the individual grooves have been punched out.

17. The method according to one of claims 7 to 16, **characterised in that** a surface structure is impressed into the security document before and/or during and/or after punching out.

18. The method according to claim 17, **characterised in that** the surface structure is formed at least partially as a microfont and/or at least partially as a lens structure.

## Revendications

1. Document de sécurité multicouches, une matière support (30) imprimable composée d'un calicot en papier ou en matière plastique (34) et d'un revêtement en polyéthylène (32) étant reliée avec au moins un film de recouvrement au moins en partie transparent ou un composite de films de recouvrement (10) au moins en partie transparent, **caractérisé en ce qu'**entre le film de recouvrement ou le composite de films de recouvrement (10) et la matière support (30), il est prévu un composite stratifié en photopolymère (20) qui consiste dans une couche en photopolymère (24) collée avec un film de recouvrement en photopolymère (22, 26) constitué de matière plastique, la couche en photopolymère (24) et le film de recouvrement en photopolymère (22, 26) étant au moins en partie transparents et des informations étant irradiées dans au moins une zone de la couche en photopolymère, le composite stratifié en photopolymère (20) étant relié avec le film de recouvrement ou avec le composite de films de recouvrement (10) et la matière support (30), le film de recouvrement en photopolymère (22, 26) étant constitué en majeure partie de polyéthylène et le film de recouvrement étant conçu en tant que couche de polyéthylène ou le composite de films de recouvrement (10) comportant une couche de polyéthylène (14) faisant face à la matière support (30).

2. Document de sécurité multicouches selon la revendication 1, **caractérisé en ce que** la couche en photopolymère (24) du composite stratifié en photopolymère est sensiblement plus épaisse que 50 µm.

3. Document de sécurité multicouches selon l'une quelconque des revendications 1 à 2, **caractérisé en ce que** sur le côté sur lequel il n'est prévu aucun composite stratifié en photopolymère (20), la matière support (30) est reliée avec un film de recouvrement au moins en partie transparent ou avec un composite de films de recouvrement (40) au moins en partie transparent.

4. Document de sécurité multicouches selon l'une quelconque des revendications 1 à 3, **caractérisé en ce que** le composite de films de recouvrement (10, 40) consiste dans une couche en polyéthylène (14, 42) et dans une couche antirayures (12, 44) faisant face au côté extérieur du document de sécurité.

5. Document de sécurité multicouches selon la revendication 4, **caractérisé en ce que** la couche antirayures (12, 44) est en polyester.

6. Document de sécurité multicouches selon l'une quelconque des revendications 1 à 5, **caractérisé en ce que** le composite stratifié en photopolymère (20) et/ou la matière support (30) et/ou le film de recouvrement ou le composite de films de recouvrement (10, 40) sont réalisés en version active laser.

7. Procédé de fabrication d'un document de sécurité multicouches, constitué d'une matière support (30) imprimable et d'au moins un film de recouvrement au moins en partie transparent ou d'un composite de films de recouvrement (10) au moins en partie transparent, avec les étapes suivantes :
a) revêtement au moins partiel de la matière support (30) composée d'un calicot en papier ou en matière plastique et d'un revêtement en polyéthylène (32) se trouvant sur un transrouleur (100) avec un agent adhésif (104),
b) amenage d'un composite stratifié en photopolymère se trouvant sur le transrouleur (110), sur le côté de la matière support qui est muni de l'agent adhésif, le composite stratifié en photopolymère étant constitué d'une couche de photopolymère (24) collée sur les deux côtés avec un film de recouvrement en photopolymère (22, 26) en matière plastique, la couche en photopolymère (24) et le film de recouvrement en photopolymère (22, 26) étant au moins en partie transparents et des informations étant irradiées dans au moins une zone de la couche en photopolymère, le film de recouvrement en photopolymère (22, 26) étant constitué en majeure partie de polyéthylène.
c) amenage du film de recouvrement se trouvant sur un transrouleur (120) ou du composite de films de recouvrement (10) se trouvant sur un transrouleur (120) au-dessus du composite stratifié en photopolymères (20), le film de recouvrement étant constitué en tant que couche en polyéthylène ou le composite de films de recouvrement (10) comportant une couche de polyéthylène (14) faisant face à la matière support (30),
d) assemblage du film de recouvrement, du composite stratifié en photopolymères et de la matière support au moyen de cylindres de pression chauffés (122),
e) découpage des éléments individuels au moyen d'une installation de découpage (128).

8. Procédé selon la revendication 7, **caractérisé en ce que** pendant l'amenage avec la matière support, le composite stratifié en photopolymère (20) est aligné à l'aide d'une marque de positionnement se trouvant sur le composite stratifié en photopolymère et d'une marque de positionnement supplémentaire se trouvant sur la matière support, les marques de positionnement étant lues auparavant au moyen d'un lecteur de marques de positionnement (112).

9. Procédé selon l'une quelconque des revendications 7 à 8, **caractérisé en ce qu'**on fait sécher l'agent adhésif, avant l'amenage du composite stratifié en photopolymères, au moyen d'un chauffage (106).

10. Procédé selon l'une quelconque des revendications 7 à 9, **caractérisé en ce que** le composite stratifié en photopolymère (20) est amené latéralement, le sens de déplacement du composite stratifié en photopolymères (204) étant sensiblement debout à la verticale du sens de déplacement de la matière support (202).

11. Procédé selon l'une quelconque des revendications 7 à 10 **caractérisé en ce qu'**avant l'amenage du film de recouvrement ou du composite de films de recouvrement, des éléments individuels sont découpés dans la matière support (30) avec le composite stratifié en photopolymère (20), au moyen d'une installation de découpage (114).

12. Procédé selon l'une quelconque des revendications 7 à 11, **caractérisé en ce que** le sens d'amenage du film de recouvrement ou du composite de films de recouvrement (208) s'étend sensiblement à la parallèle du sens de déplacement de la matière support avec le composite stratifié en photopolymère (206).

13. Procédé selon l'une quelconque des revendications 7 à 12, **caractérisé en ce que** sur le côté de la matière support ne contenant pas le composite stratifié en photopolymère, avant la liaison de matière support, du composite stratifié en photopolymère et du film de recouvrement ou du composite de films de recouvrement, il est amené en supplément un film de recouvrement supplémentaire (40) se trouvant sur un transrouleur (121) ou un composite de films de recouvrement (40) supplémentaire se trouvant sur un transrouleur (121).

14. Procédé selon la revendication 13, **caractérisé en ce que** l'assemblage du film de recouvrement ou du composite de films de recouvrement (40) qui ne se trouve pas sur le côté du composite stratifié en photopolymère, ainsi que du composite stratifié en photopolymère (20) et de la matière support (30) et du film de recouvrement ou du composite de films de recouvrement (10) est effectué sur le côté du composite stratifié en photopolymère pendant la même étape de travail, au moyen de cylindres de pression chauffés (122).

15. Procédé selon l'une quelconque des revendications 7 à 14, **caractérisé en ce que** la température d'assemblage de la matière support (30), du composite stratifié en photopolymère (20) et du film de recouvrement ou du composite de films de recouvrement (10, 40) se situe dans l'ordre de 100°C à 200°C.

16. Procédé selon l'une quelconque des revendications 7 à 15, **caractérisé en ce que** les données et caractéristiques de sécurité contenues dans le document de sécurité sont vérifiées après le découpage des éléments individuels au moyen d'un ou de plusieurs lecteurs (130).

17. Procédé selon l'une quelconque des revendications 7 à 16, **caractérisé en ce qu'**avant et/ou pendant et/ou après le découpage, une structure superficielle est gaufrée dans le document de sécurité.

18. Procédé selon la revendication 17, **caractérisé en ce que** la structure superficielle est réalisée au moins en partie en tant que micro-écriture et/ou au moins en partie en tant que structure lenticulaire.
